# EUROPEAN PATENT APPLICATION

(11) **EP 3 139 324 A1**
(43) Date of publication of application: **08.03.2017**
(21) Application number: 16186988.8
(22) Date of filing: 02.09.2016
(51) Int. Cl.: G06Q 10/06, D01H 13/14, G05B 19/418, G05B 23/00

(54) **TEXTILE MACHINERY MANAGEMENT SYSTEM**

(30) Priority: 04.09.2015 JP 2015175008
(71) Applicant: Murata Machinery, Ltd., Minami-ku Kyoto-shi Kyoto 601-8326 (JP)
(72) Inventor: ENAMI, Satoshi, Kyoto-shi, Kyoto 612-8686 (JP); SUSAMI, Hiroyuki, Kyoto-shi, Kyoto 612-8686 (JP); YAMADA, Shuji, Kyoto-shi, Kyoto 612-8686 (JP)
(74) Representative: Stöckeler, Ferdinand

(57) **Abstract**

A textile machinery management system includes textile machinery having a control device and a management device that manages the textile machinery. The control device is configured to acquire operating state information on the textile machinery. The management device includes a first acquisition unit configured to acquire the operating state information on the textile machinery that is acquired by the control device, an analyzer that analyzes the operating state information acquired by the first acquisition unit, and a first output unit that outputs a result of analysis by the analyzer. The control device includes a second acquisition unit configured to acquire the result of analysis output by the first output unit, a second output unit that outputs the result of analysis acquired by the second acquisition unit, and a maintenance information input unit that accepts input of response information for the result of analysis output by the second output unit. The first acquisition unit also acquires the response information accepted by the maintenance information input unit. The analyzer updates the result of analysis based on the response information acquired through the first acquisition unit in a case where the response information is input to the maintenance information input unit.

## Description

### TECHNICAL FIELD

The present disclosure relates to a textile machinery management system.

### BACKGROUND

A management device for collecting and analyzing information from textile machinery has been utilized to easily grasp the states of a plurality of units of textile machinery on the whole and help early detection of errors. For example, Patent Literatures 1 to 3 disclose management devices of this type.

Patent Literature 1 (Japanese Unexamined Patent Publication No. H6-127828) discloses a system for diagnosing a failure in machines in textile machinery having a plurality of units. The machine includes a control device. The control device is connected to a host management device through a transmission line. The management device is configured to receive operating state information on each winding unit of the machine. The management device is connected with a diagnosis device. The diagnosis device receives the operating state information from the management device, diagnoses the content of an error, if any, and displays it on the screen. The system described in Patent Literature 1 is configured as described above to easily diagnose the cause of a failure.

Patent Literature 2 (Japanese Unexamined Patent Publication No. 2002-137867) discloses a management system for a spun yarn winding machine including an induction motor for driving a bobbin holder. The management system collects slip information about slip of the induction motors in a number of winding machines to conduct statistical processing. Patent Literature 2 also discloses a configuration in which setting computers installed in plants are connected to the Internet. The setting computer in each plant transmits slip information on an induction motor to a server computer connected to the Internet likewise. The server computer then conducts statistical processing on the slip information and sends back the result to the setting computer. The management system described in Patent Literature 2 thus enables maintenance and management of the winding machines on a large scale.

Patent Literature 3 (Japanese Unexamined Patent Publication No. H8-269825) discloses a method of monitoring a spinning machine unit. Each spinning machine having 200 spinning units includes a spinning machine calculator. Each spinning machine calculator transfers a signal of a sensor in the spinning machine to a process control calculator through a signal transmission network. The process control calculator is configured to view a state of the spinning room. The method of monitoring a spinning machine or a spinning machine unit in Patent Literature 3 thus can clarify the source of a failure and prevent increase of the risk of failures.

### SUMMARY

In order to effectively assist maintenance activities for textile machinery, it is preferable that the work actually conducted by a maintenance administrator be input as response information to a host device so that the result of this is reflected in an analysis result. It is, however, extremely difficult to input response information to the host device and have it reflected in the analysis result. This is because the host device and the textile machinery are often disposed at physically separate locations, such that, for example, the host device is installed in a quality control building while the textile machinery is installed in a production building. In such a situation, intercommunication between the host device and the textile machinery is difficult. Since the host device collects information on a large number of units of textile machinery, inputting response information for individual textile processing units to the host device requires a great deal of time and is not practical.

An object of an embodiment of the present disclosure is therefore to provide a textile machinery management system capable of assisting maintenance activities for textile machinery more effectively.

This object is obtained by a textile machinery management system according to claim 1.

A textile machinery management system includes textile machinery having a control device and a management device configured to manage the textile machinery. The control device is configured to acquire operating state information on the textile machinery. The management device includes a first acquisition unit configured to acquire the operating state information on the textile machinery that is acquired by the control device, an analyzer configured to analyze the operating state information acquired by the first acquisition unit, and a first output unit configured to output a result of analysis performed by the analyzer. The control device includes a second acquisition unit configured to acquire the result of analysis output by the first output unit, a second output unit configured to output the result of analysis acquired by the second acquisition unit, and a maintenance information input unit configured to accept input of response information for the result of analysis output by the second output unit. The first acquisition unit also acquires the response information accepted by the maintenance information input unit. In a case where the response information is input to the maintenance information input unit, the analyzer updates the result of analysis based on the response information acquired through the first acquisition unit.

In the textile machinery management system configured as described above, the control device not only acquires the operating state information on the textile machinery but also acquires the response information for the analysis result output from the management device. Since the response information is acquired by the management device through the first acquisition unit, the response information can be easily collected in the management device. This makes response information easy to acquire, which is conventionally difficult to collect, and enables the management device to conduct analysis based on the response information. As a result, the textile machinery management system is capable of assisting the maintenance activities for the textile machinery more effectively.

In an aspect of the present disclosure, the maintenance information input unit may accept one of a plurality of selectable pieces of information prepared in advance, as the response information. In the textile machinery management system configured as described above, the operator only has to selectively input the minimum required information through the maintenance information input unit, thereby eliminating an increase in burden on the operator. This can prompt the operator to input response information and can ensure acquisition of necessary information.

In an aspect of the present disclosure, the plurality of selectable pieces of information prepared in advance may include "handled", "actively left", and "accidentally left". Here, "handled" indicates that the operator takes some measures, "actively left" indicates that the operator selects nothing to be done on purpose, and "accidentally left" indicates that the operator does not know the measures to be taken and thus does nothing, or the operator fails to input and eventually does nothing. The operator has only to selectively input the minimum required simple information through the maintenance information input unit, thereby eliminating an increase in burden on the operator. This can prompt the operator to input response information and can ensure acquisition of necessary information.

In an aspect of the present disclosure, the maintenance information input unit may accept specific information among the plurality of selectable pieces of information prepared in advance, as the response information, when nothing is input as the response information for a predetermined time or longer. In the textile machinery management system configured as described above, the operating state including a case where the operator inputs nothing can be analyzed.

In an aspect of the present disclosure, the maintenance information input unit may accept the "accidentally left" as the response information when nothing is input as the response information for a predetermined time or longer. In the textile machinery management system configured as described above, the operating state including a case where the operator inputs nothing can be analyzed appropriately.

In an aspect of the present disclosure, the analyzer may analyze whether an error occurs in the textile machinery based on the operating state information and the response information and determine which of "initial", "recurrence after being handled", and "recurrence after being left" the error is. The term "initial" indicates an error that has no history of occurrence in the past and occurs for the first time, the term "recurrence after being handled" indicates an error that occurs again although some actions have been taken, and the term "recurrence after being left" indicates that an error occurs again as a result of being left without taking actions at the time of error occurrence, or that an error continuously occurs. In the textile machinery management system configured as described above, the administrator can easily grasp the error recurrence state. Accordingly, for example, in the case of "recurrence after being handled", it is determined that the measures taken have no effect, and the next response such as reviewing the work can be examined. For example, in the case of "recurrence after being left", it is found that the operator needs operational guidance and education.

In an aspect of the present disclosure, the management device may be connected to a display device configured to display the result of analysis output by the second output unit. In the textile machinery management system configured as described above, for example, the operator can be notified of the analysis result effectively.

In an aspect of the present disclosure, the control device may further include a third output unit configured to output the response information accepted by the maintenance information input unit. The first acquisition unit may acquire , at any time the response information output by the third output unit. The response information for the operating state information may be updated at any time and displayed on the display device. In the textile machinery management system configured as described above, the administrator can grasp the operator's response state real-time in connection with the operating state information.

In an aspect of the present disclosure, the analyzer may analyze the operating state information at a second timing different from a first timing at which the first output unit periodically outputs the result of analysis, the second timing being a periodical timing shorter than the first timing. In the textile machinery management system configured as described above, the administrator can analyze the operating state information so as to follow the operator's response information updated at any time and can grasp the operating state at present.

In an aspect of the present disclosure, the operating state information may be displayed on the display device, in a state in which error recurrence states are sorted according to each unit of the textile machinery. In the textile machinery management system configured as described above, the administrator can easily grasp the error recurrence state in the entire plant.

In an aspect of the present disclosure, the first output unit may have a first output mode and a second output mode, as a mode for deciding on a timing for outputting the result of analysis to the control device. In the first output mode, the result of analysis may be automatically output periodically at a preset timing. In the second output mode, the result of analysis may be output at a timing manually set. In the textile machinery management system configured as described above, the administrator can output the analysis result periodically or at any timing.

In view of advantageous aspects of the invention, the maintenance activities of the textile machinery can be assisted more effectively.

### BRIEF DESCRIPTION OF THE DRAWINGS

FIG. 1 is configuration diagram of a textile machinery management system according to an embodiment.
FIG. 2 is a functional block diagram showing a functional configuration of the textile machinery management system in FIG. 1.
FIG. 3 shows an exemplary maintenance information reference screen.
FIG. 4 shows an exemplary transmission setting screen.
FIG. 5 shows an exemplary automatic transmission setting screen.
FIG. 6A shows an exemplary new notification screen.
FIG. 6B shows an exemplary new notification screen.
FIG. 6C shows an exemplary new notification screen.
FIG. 7 shows an exemplary message display screen.
FIG. 8 shows an exemplary notification information list screen.
FIG. 9A shows exemplary display of an unread notice.
FIG. 9B shows exemplary display of an unread notice.
FIG. 9C shows exemplary display of an unread notice.
FIG. 10 shows an exemplary machine-specific status list screen.
FIG. 11 shows an exemplary status information list screen.
FIG. 12 is a flowchart illustrating an exemplary method of determining maintenance information.
FIG. 13 shows an exemplary maintenance information reference screen.
FIG. 14 is a diagram illustrating an example of updating of maintenance information.
FIG. 15 is a diagram illustrating an example of updating of maintenance information.
FIG. 16 shows an example of legends for the determination results of maintenance information displayed in the maintenance information reference screen.

### DETAILED DESCRIPTION

An embodiment will be described below with reference to the drawings. In the description of the drawings, the same elements are denoted with the same reference signs and an overlapping description is omitted.

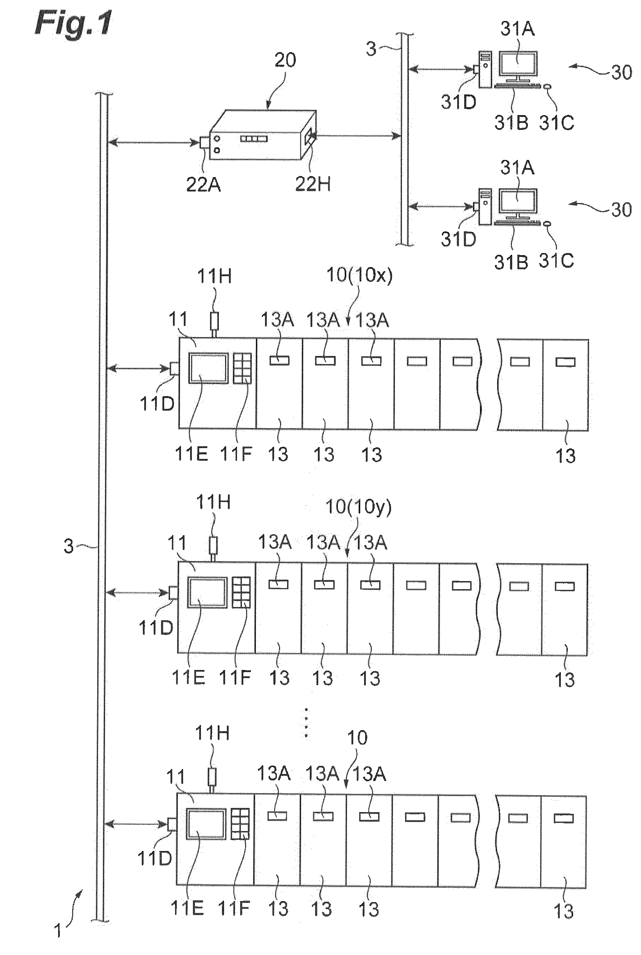

A textile machinery management system 1 according to an embodiment will be described. The textile machinery management system 1 is a system that collectively manages a plurality of units of textile machinery 10. As shown in FIG. 1, the textile machinery management system 1 includes the plurality of units of textile machinery 10 and a management device 20. The management device 20 is manipulated through a general personal computer 30 connected to the management device 20. The personal computer 30 is a desktop personal computer and includes a display 31A, a keyboard 31B, a mouse 31 C, and a local area network (LAN) interface 31 D. The LAN interface 31 D is connected to a second communication unit 22H described later through a LAN 3. Not only a personal computer 30 but also, for example, a notebook personal computer, a tablet, and/or a smartphone may be connected to the management device 20.

The textile machinery 10 to be managed by the textile machinery management system 1 of the present embodiment will now be described. Examples of the textile machinery include an automatic winder. The automatic winder is a machine that unwinds yarn from a yarn feeding bobbin having yarn spun by a spinning machine and winds the yarn on a take up tube to form a package of wound yarn of a predetermined length. The textile machinery 10 includes a machine control device (control device) 11 and a plurality of textile processing units 13 arranged side by side. Other examples of the textile machinery include a pneumatic spinning frame, a roving frame, a spinning frame, a weaving machine, a knitting machine, a spun yarn winding machine, and a draw texturing machine.

The individual textile processing unit 13 includes a unit controller 13A. The unit controller 13A includes a not-shown central processing unit (CPU), a read only memory (ROM), a random access memory (RAM), and an input/output port. The ROM stores a program for controlling the configuration of the textile processing unit 13. The CPU reads out a winding program stored in the ROM to the RAM for execution to enable control on the configuration of the textile processing unit 13.

The input/output port of each unit controller 13A is connected to the machine control device 11 to transmit/receive information. The machine control device 11 thus can centrally manage the plurality of textile processing units 13 of the textile machinery 10.

The machine control device 11 is configured as a microcomputer and includes a display 11E, an input key 11F, and a LAN interface 11D. The LAN interface 11D of the individual machine control device 11 is connected to the LAN 3, which is a network constructed in a plant. The textile machinery 10 also includes a tower lamp 11H for notifying, for example, the operator of a situation that requires attention.

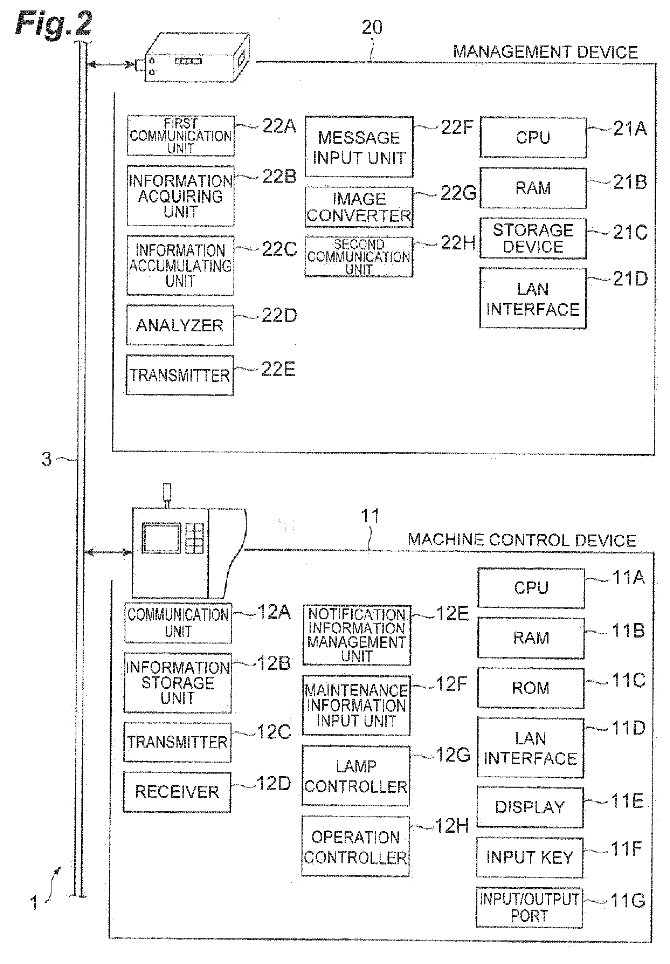

As shown in FIG. 2, the machine control device 11 includes a CPU 11 A, a RAM 11B, a ROM 11C, and an input/output port 11G. The ROM 11C stores a control program for controlling the textile processing unit 13. The CPU 11A reads out the control program stored in the ROM 11C to the RAM 11B for execution to allow the textile processing unit 13 to control each part.

The input/output port 11 G of the machine control device 11 is connected to the input/output port (not shown) of the unit controller 13A in each textile processing unit 13 through an appropriate communication line. This configuration allows the machine control device 11 to transmit various control conditions to the unit controller 13A of the individual textile processing unit 13 and set the various control conditions. The machine control device 11 is configured to obtain information about the current operating state (hereinafter referred to as "operating state information") in the individual processing unit 13 from the unit controller 13A of the textile processing unit 13.

The control conditions for spinning machines include, for example, items concerning spinning settings such as spinning speed and settings for a yarn fault-removing device. The operating state information for spinning machines includes, for example, operation data such as production efficiency and spun yarn quality data such as fault counts. Similarly, the control conditions for automatic winders include, for example, items concerning yarn winding conditions such as winding speed, yarn count, take up tension, winding volume of winding packages, package weight, and yarn faults. The operating state information for automatic winders includes, for example, yarn winding state information such as current package diameter, current winding speed, occurrence of yarn breakage, and detection of yarn faults.

Specifically, for example, the operator can display a control condition setting menu on the display 11E of the machine control device 11 through appropriate manipulation and set control conditions by inputting numeric values with the input key 11F. The setting values related to the control conditions may be transmitted to each individual specified textile processing unit 13 or may be transmitted collectively to all of the textile processing units 13.

The machine control device 11 is configured to display the operating state information, which changes every moment, real-time on the display 11E. The machine control device 11 is also configured to store past history of operating state information and, for example, display a graph representing the yarn fault frequency plotted on the time axis on the display 11E.

In this manner, for example, the operator can collectively set the control conditions for the plurality of textile processing units 13 with the machine control device 11 and can view the operating state information on the plurality of textile processing units 13 all together with the machine control device 11. The textile machinery 10 therefore can be managed efficiently. The operating state information and the control conditions are transmitted to the management device 20 described later to undergo a variety of analyses in order to take effective management activities. The information transmitted from the textile machinery 10 to the management device 20 is not limited to the operating state information and the control conditions. For example, the operating state information alone may be transmitted, or other information may be included in addition to the operating state information and the control conditions.

The textile machinery management system 1 including the textile machinery 10 and the management device 20 will now be described in details. The textile machinery management system 1 includes the management device (host management device) 20 that centrally manages the plurality of units of textile machinery 10. The management device 20 is mainly manipulated by the administrator who manages maintenance activities and production efficiency.

The LAN 3 constructed in the plant is connected to the respective machine control devices 11 of the plurality of units of textile machinery 10 (textile machinery 10x, 10y) as shown in FIG. 1. The LAN 3 is in turn connected to the host device 20. This configuration enables exchange of a variety of information between the machine control devices 11 and the management device 20.

First of all, an electrical configuration of the management device 20 will be described. In the present embodiment, the management device 20 is configured as a control unit and includes, as shown in FIG. 2, a CPU 21 A, a RAM 21B, a storage device (for example, such as a solid state drive (SSD) and mSATA) 21C, and a LAN interface 21D, which are housed in a casing. The storage device 21C stores a management program for centrally managing the machine control devices 11 of the plurality of units of textile machinery 10. The LAN interface 21D is connected to the LAN 3.

The hardware as described above cooperates with software to allow the management device 20 to function as, for example, a first communication unit 22A, an information acquiring unit (first acquisition unit) 22B, an information accumulating unit 22C, an analyzer 22D, a transmitter (first output unit) 22E, a message input unit 22F, an image converter 22G, and a second communication unit 22H.

The first communication unit 22A is configured to communicate with the machine control device 11 of the textile machinery 10 through the LAN 3.

The information acquiring unit 22B acquires the operating state information on the textile machinery 10 acquired by the machine control device 11. More specifically, the information acquiring unit 22B receives the operating state information and the control conditions from the machine control device 11 of the textile machinery 10. The information acquiring unit 22B also receives information input from a status information list screen 77 described later, that is, response information for a textile processing unit 13.

In the present embodiment, the information acquiring unit 22B receives the operating state information from the machine control device 11 of the textile machinery 10 through the first communication unit 22A. In place of this configuration, for example, the operating state information may be output to a removable storage device (for example, a USB memory or a memory card) connected to the machine control device 11, and then the removal storage device may be connected to the management device 20, so that the first acquisition unit acquires the operating state information from the removable storage device. In the present embodiment, the receiver 12D receives the result of analysis conducted by the management device 20 from the management device 20 through the communication unit 12A. In place of this configuration, for example, the result of analysis may be output to a removable storage device (for example, a USB memory or a memory card) connected to the management device 20, and then the removable storage device may be connected to the machine control device 11, so that the second acquisition unit acquires the result of analysis from the removable storage device.

The information accumulating unit 22C is formed with, for example, the storage device 21C and stores the operating state information and the control conditions input to the information acquiring unit 22B for a predetermined period. Alternatively, the information accumulating unit 22C may be a hard disc drive (HDD) or may be a storage device such as a server connectable through a network.

The analyzer 22D analyzes the operating state information acquired by the information acquiring unit 22B. More specifically, the analyzer 22D performs a predetermined analysis work (computation) based on the operating state information and the control conditions input by the information acquisition unit 22B and stored in the information accumulating unit 22C to obtain an analysis result (maintenance information). When the textile machinery 10 is a spinning machine, the analyzer 22D can analyze, for example, operation data of each unit, quality data, and occurrence frequency of alarms. When the textile machinery 10 is an automatic winder, the winding efficiency of the textile processing unit 13 and the frequency of occurrence of faults by a clearer can be highly analyzed, for example, using standard deviations. The analyzer 22D can also generate an image (for example, a list or a graph image) graphically representing the analysis result in a manner easy to understand for users of the management device 20. Details of the analysis result of the analyzer 22D will be described later.

For example, the analyzer 22D analyzes the operating state information at a second timing different from a first timing at which the transmitter 22E periodically transmits the analysis result. The second timing is a periodical timing shorter than the first timing.

The transmitter 22E outputs the result of analysis performed by the analyzer 22D. More specifically, the transmitter 22E transmits the result of analysis performed by the analyzer 22D to the machine control device 11 of the textile machinery 10 through the first communication unit 22A. When receiving a message input by the message input unit 22F described later, the transmitter 22E transmits the content of the input message (a message image created by the image converter 22G described later) together with the result of analysis to the machine control device 11 of the textile machinery 10. The transmitter 22E can further transmit a command related to the operation of the textile machinery 10 when the user of the management device 20 gives an instruction.

When transmitting the result of analysis and the message (hereinafter also referred to as "notification information") to the machine control device 11, the transmitter 22E can set the target machine control device, the degree of importance and the distribution time of the notification information to be transmitted, whether to display a pop-up on the display 11E of the machine control device 11 to indicate that the notification information is given, and whether to display a screen saver to indicate that the notification information is given. Details of this function will be described later.

The message input unit 22F allows the user of the management device 20 to input a message (character string) that the user wishes to convey to, for example, the operator of the textile machinery 10. The message (character string) is input, for example, through the keyboard 31B of the personal computer 30 connected through the LAN 3.

The image converter 22G converts the character string input from the message input unit 22F into an image (message image) representing the message.

The second communication unit 22H is configured to communicate with the machine control device 11 of the textile machinery 10 through the LAN 3.

In this manner, the management device 20 acquires the operating state information on the textile machinery 10, analyzes the acquired operating state information, and transmits the analysis result to the machine control device 11, and in a case where response information is received, updates the analysis result based on the response information. That is, the management device 20 is a circuit configured to execute acquisition of the operating state information on the textile machinery 10, analysis of the acquired operating state information, transmission of the analysis result to the machine control device 11, and in a case where response information is received, updating of the analysis result based on the response information.

An electrical configuration of the machine control device 11 of the textile machinery 10 will now be described. That is, in the individual textile machinery 10, the ROM 11C of the machine control device 11 stores a transmission/reception program for communicating with the management device 20, in addition to the aforementioned control program. The hardware such as the CPU 11 A, the RAM 11B, and the ROM 11 C and the software such as the transmission/reception program cooperate together to allow the machine control device 11 to function as a communication unit 12A, an information storage unit 12B, a transmitter (third output unit) 12C, a receiver (second acquisition unit) 12D, a notification information management unit (second output unit) 12E, a maintenance information input unit 12F, a lamp controller 12G, an operation controller 12H, and other units.

The communication unit 12A is configured to communicate with the management device 20 through the LAN 3.

The information storage unit 12B is configured with a nonvolatile storage unit (for example, EEPROM) to store the operating state information and the control conditions of the textile machinery 10 for a predetermined period. The storage capacity of the information storage unit 12B is generally smaller than that of the storage device 21C of the management device 20. The storage device 21C thus can store the operating state information and the control conditions for a longer period and can store more kinds of information.

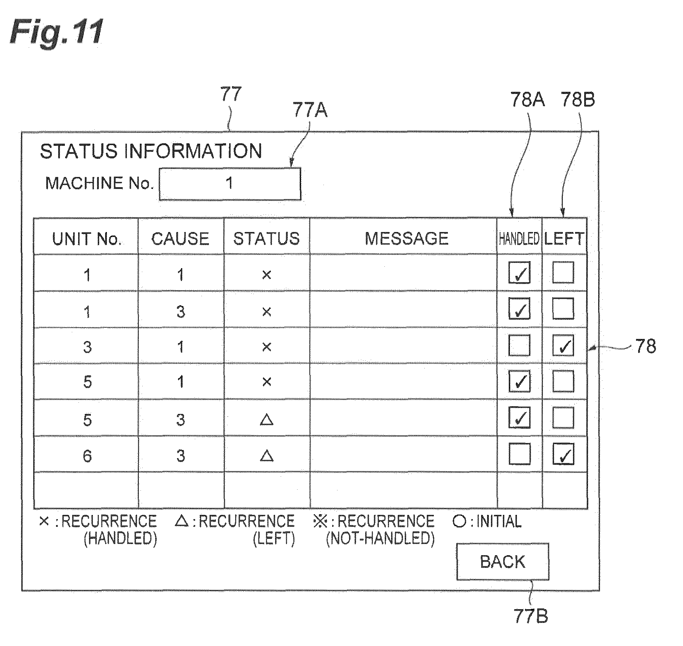

The transmitter 12C transmits the operating state information on the textile machinery 10 to the management device 20 through the communication unit 12A. The transmitter 12C also outputs the response information accepted by the maintenance information input unit 12F described later. More specifically, the transmitter 12C transmits information input from the status information list screen 77 (see FIG. 11) described later, that is, response information for the textile processing unit 13 to the management device 20 through the communication unit 12A.

The receiver 12D acquires the analysis result output by the information acquisition unit 22B. More specifically, the receiver 12D receives the result of analysis conducted by the management device 20 in connection with the operating state information and the control conditions, from the management device 20 through the communication unit 12A. The received analysis result appears on the display 11E through manipulation of the input key 11F as appropriate, for example, by the operator. When the receiver 12D receives data of a message together with the analysis result, the message also appears on the display 11E through manipulation of the input key 11F as appropriate, for example, by the operator.

The notification information management unit 12E manages the notification information transmitted from the management device 20. For each message received by the receiver 12D, the notification information management unit 12E stores whether the message has appeared on the display 11E (in other words, whether, for example, the operator performs manipulation for displaying the message). The read/unread state of such a message is transmitted to the management device 20 through the communication unit 12A. As a result, the read/unread state of the message can be viewed, for example, in a list form on the display 31A of the personal computer 30 connected to the management device 20. The user of the management device 20 thus can easily check whether, for example, the operator of the individual textile machinery 10 has viewed the message.

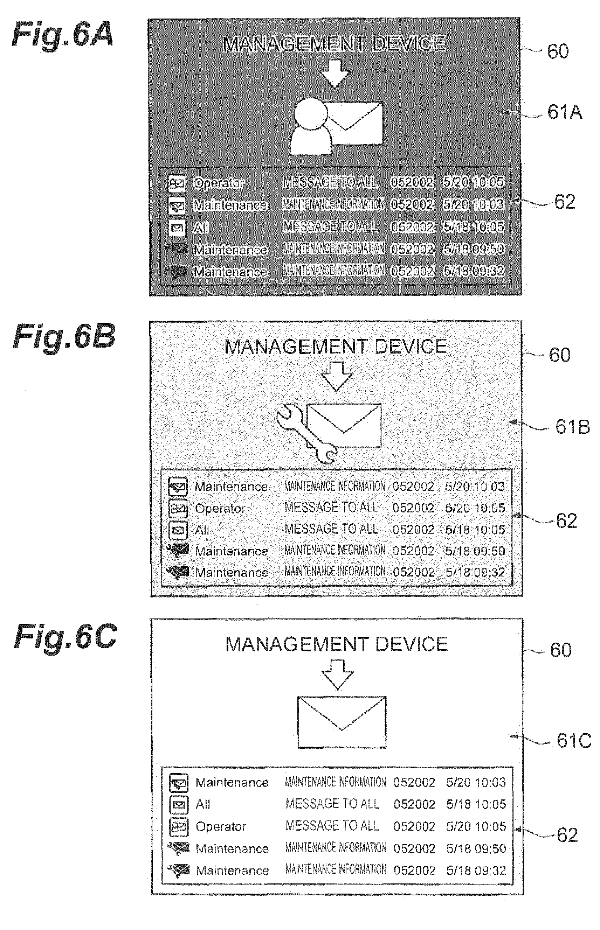

When transmitting the notification information, the management device 20 specifies the target (operators, maintenance workers, or all) intended to receive the notification information. The notification information management unit 12E provides the function of displaying the target to whom the information given from the management device 20 is addressed, in a visually distinguishable manner, as shown in FIGS. 6A, 6B, and 6C. This function will be detailed later.

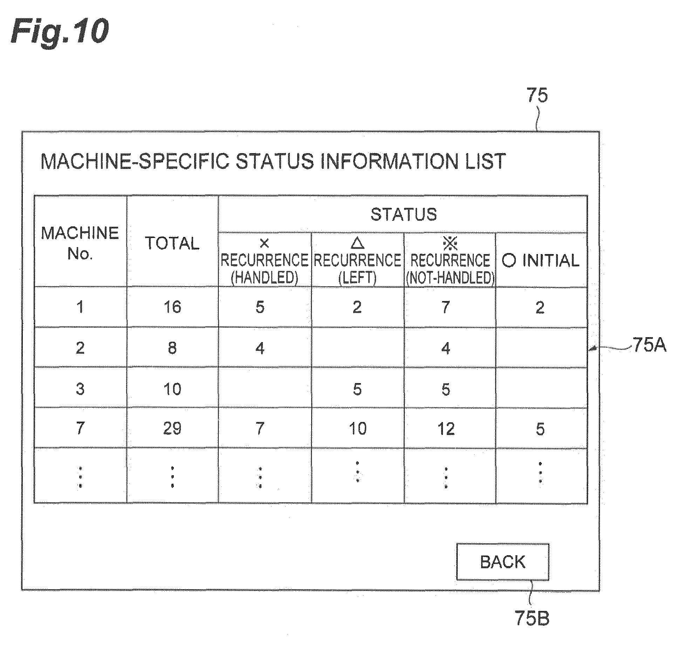

The notification information management unit 12E outputs the analysis result acquired by the receiver 12D. More specifically, the notification information management unit 12E further provides: the function of displaying maintenance information (analysis result) transmitted from the management device 20, for each machine, that is, for example, as shown in FIG. 10, the maintenance information in units of textile machinery 10 connected to the management device 20, including other textile machinery 10; and the function of displaying the maintenance information for each of the textile processing units 13 belonging to the machinery itself, for example, as shown in FIG.11. These functions will be detailed later.

The maintenance information input unit 12F accepts input of response information for the analysis result output by the notification information management unit 12E. More specifically, the maintenance information input unit 12F has the function of inputting the response result, based on the maintenance information transmitted from the management device 20. For example, as shown in FIG. 11, the provided function accepts input of information indicating, for example, whether the response such as repair is done or no measures are taken although the maintenance information is recognized for the maintenance information transmitted from the management device 20. This function will be detailed later.

The lamp controller 12G allows the tower lamp 11 H provided on the textile machinery 10 to illuminate or flash on and off when the receiver 12D receives an analysis result or a message transmitted from the management device 20. This can, for example, prompt the operator or any other person to check the analysis result or the message.

When receiving a command related to the operation of the textile machinery 10 from the management device 20 through the receiver 12D, the operation controller 12H controls the textile machinery 10 so as to operate in accordance with the command. This enables the management device 20 to remotely control the operation of the textile machinery 10.

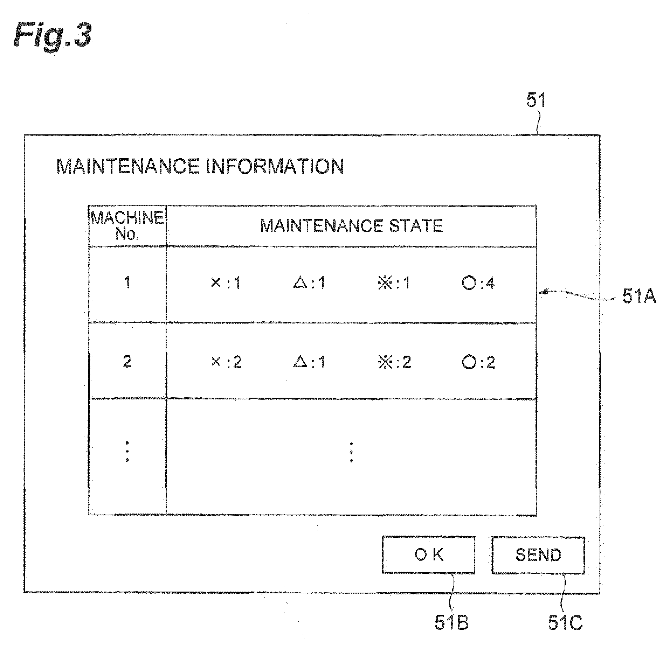

Referring to FIG. 3 to FIG. 16, the function of transmitting maintenance information from the management device 20 to the textile machinery 10 and the function of collecting response information corresponding to maintenance information will now be described. The maintenance information refers to information about a defective textile processing unit analyzed based on the operating state information and the control conditions stored in the information accumulating unit 22C, and information about the history of measures taken for a defective textile processing unit.

The analyzer 22D of the management device 20 determines a textile processing unit 13 that newly develops a defect (error) (hereinafter referred to as "initial unit"), based on the operating state information and the control conditions stored in the information accumulating unit 22C. The analyzer 22D also determines a textile processing unit 13 that develops a recurring defect (hereinafter referred to as "recurrent unit") and a textile processing unit 13 on which no measures have been taken, based on the history of measures taken for the textile processing units 13 that develop defects. Furthermore, the analyzer 22D determines whether the textile processing unit 13 on which no measures have been taken is a textile processing unit 13 (hereinafter referred to as "left unit") on which no measures have been taken intentionally, or a textile processing unit 13 (hereinafter referred to as "not-handled unit") on which no measures have been taken because of a failure to view maintenance information (no input through the status information list screen 77 described later).

The management device 20 can display the result of analysis performed by the analyzer 22D on the display 31A of the personal computer 30. The result of analysis performed by the analyzer 22D appears in the form of a maintenance information reference screen 51 as shown in FIG. 3. The maintenance information reference screen 51 displays a maintenance information display area 51A, an OK button 51 B, and a send button 51 C.

The maintenance information display area 51A shows the respective numbers of initial units, recurrent units, left units, and not-handled units in single textile machinery (machine) 10. In the maintenance information display area 51 A, as shown in FIG. 3, the initial unit, the recurrent unit, the left unit, and the not-handled unit each are denoted by symbols "×", "Δ", " 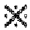 ", and "O", respectively. The symbols representing the initial unit, the recurrent unit, the left unit, and the not-handled unit are not limited to " ×", "Δ", " 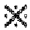 ", and "○", and those units may be displayed with, for example, a red circle, a green circle, a yellow circle, and a blue circle. The characters for the initial unit, the recurrent unit, the left unit, and the not-handled unit may be displayed.

The OK button 51B is a button for going back to the menu screen. The send button 51C is a button for transmitting maintenance information to the textile machinery 10 through the transmitter 22E described later.

In this manner, the machine control device 11 acquires the analysis result from the management device 20 and displays (outputs) the analysis result, and accepts input of response information for the analysis result. That is, the machine control device 11 is a circuit configured to execute acquisition of the analysis result from the management device 20, display (output) of the analysis result, and acceptance of input of response information for the analysis result.

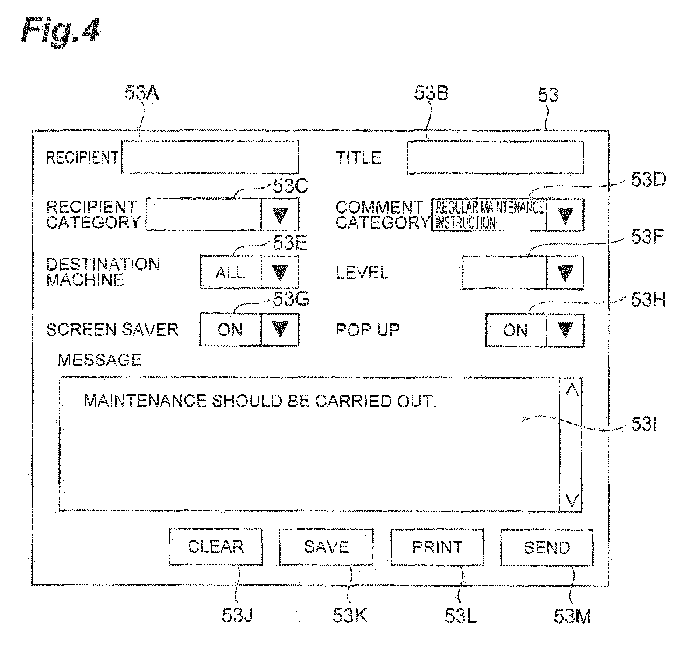

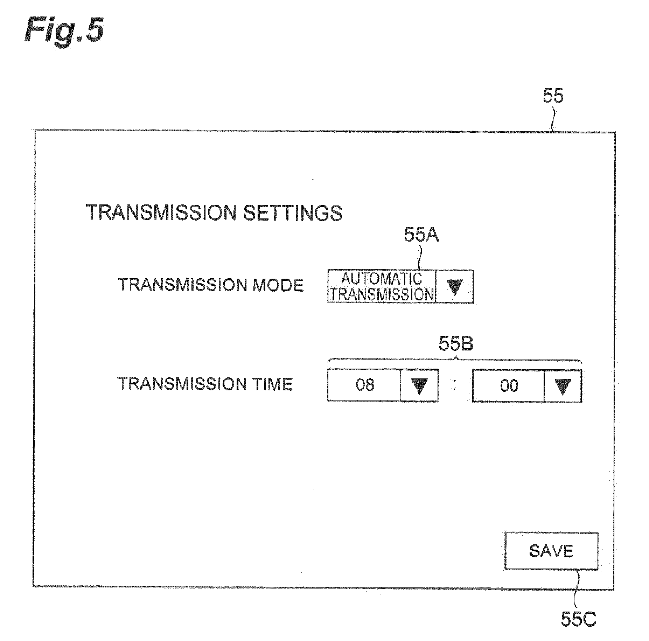

Referring to FIG. 4 and FIG. 5, the function of attaching a message to maintenance information that is transmitted from the management device 20 to the textile machinery 10 will now be described. FIG. 4 shows a transmission setting screen 53 in which settings are made when the maintenance information generated by the management device 20 is transmitted to the textile machinery 10. The transmission setting screen 53 can be displayed on the display 11E of the personal computer 30 connected to the management device 20. The display of the transmission setting screen 53 is implemented by the management program installed in the management device 20.

The transmission setting screen 53 displays a text box 53A for inputting a recipient of notification information, a text box 53B for inputting the title of notification information, a pull-down menu 53C for choosing a recipient category, a pull-down menu 53D for choosing the kind (category) of notification information to be transmitted, a pull-down menu 53E for choosing a machine as a transmission destination, a pull-down menu 53F for choosing the degree of importance of the notification information to be transmitted to the machine control device 11, a pull-down menu 53G for choosing ON/OFF of the screen saver function on the display 11E in the machine control device 11 as a notification destination, a pull-down menu 53H for choosing ON/OFF of the pop-up function on the display 11E in the machine control device 11 as a notification destination, a text box 53I for inputting a message, a clear button 53J for deleting the content input to the text box 53I, a save button 53K for temporarily saving the contents input to the entries (53A to 53I), a print button 53L for printing the contents input to the entries (53A to 53I), and a send button 53M for executing transmission in accordance with the contents input to the entries (53A to 53I).

In the text box 53A, a person's name, a group's name, or the like can be input as desired. That is, for example, a recipient not registered in the pull-down menu 53C for choosing a recipient category can be input as desired. In the text box 53B, about 20 characters can be input as desired. In the pull-down menu 53C, one of job categories (maintenance workers, operators, or all) registered in advance can be chosen. In the pull-down menu 53D, one of the kinds of comments (notification information) registered in advance can be chosen. The kinds of comments include, for example, "periodical maintenance instruction", which is an instruction on periodical check such as lubrication, "maintenance work instruction", which is an instruction on maintenance work for malfunction textile processing units based on maintenance information, "yarn type change instruction", which is an instruction on produced yarn type change, and "business operations instruction", which is an instruction on general business operations other than maintenance and production change. In the pull-down menu 53E, one of the machines registered in advance can be chosen. Individual machines, all machines, and registered groups can be chosen as the machine.

The user of the management device 20 confirms the transmission setting screen 53 as shown in FIG. 4 on the display 31 A and then clicks the send button 53M by manipulating the mouse 31 C or the like. The data of maintenance information is then transmitted from the management device 20 to the machine control device 11 of the textile machinery 10 set in the transmission setting screen 53.

The image converter 22G converts the character string in the text box 53I into an image when the maintenance information is transmitted to the machine control device 11 of the textile machinery 10. For conversion from a character string into an image, the management program to be executed in the management device 20 includes font data in advance for rendering a character string. The transmitter 22E transmits the resulting message image together with the maintenance information to the machine control device 11 of the textile machinery 10. The data of the maintenance information and the data of the message image may be transmitted from the transmitter 22E to the textile machinery 10 (machine control device 11) in the form of consolidated data or may be transmitted individually.

Although the notification information is transmitted manually (second output mode) in the example described above, an automatic transmission function may be provided to automatically transmit the notification information, for example, at 8:00 every morning (first output mode). To implement such an automatic transmission function, the transmitter 22E is configured to display, for example, an automatic transmission setting screen 55 as shown in FIG. 5 on the display 31A.

The automatic transmission setting screen 55 displays a pull-down menu 55A for choosing automatic transmission or manual transmission and a pull-down menu 55B for setting a transmission time. The user of the management device 20 can input the transmission mode and the transmission time, for example, through at least one of the keyboard 31 B and the mouse 31C.

The reception of the notification information sent from the management device 20 by the machine control device 11 of the textile machinery 10 will now be described. When the machine control device 11 receives the notification information, a new notification screen 60 appears on the display 11E to indicate the reception of the notification information, as shown in FIG. 6A to FIG. 6C. Even when an operating state screen or other screens are displayed on the display 11E, the new notification screen 60 appears if maintenance information is received. The new notification screen 60 displays marks (graphics) 61 A, 61B, 61C indicating the targets of the notification information and a list 62 of latest notification information. The lamp controller 12G of the textile machinery 10 may draw the attention of the operator or any other person by allowing the tower lamp 11H of the textile machinery 10 to illuminate or flash on and off.

The notification information management unit 12E provides the function of displaying the information given from the management device 20 in such a manner that visually distinguishes who is the target recipient (operators, maintenance workers, or all). Specifically, as shown in FIG. 6A to FIG. 6C, the background colors and the marks are different. For example, the notification addressed to operators has a "green" background color and a pictograph of "person", the notification addressed to maintenance workers includes an "orange" background color and a pictograph of "tool", and the notification addressed to all includes a "blue" background color and a pictograph of "mail". The notification is not limited to the above-described content as long as the three categories are distinguishable. The function provided by the notification information management unit 12E can notify the target recipient of notification information that notification information has arrived.

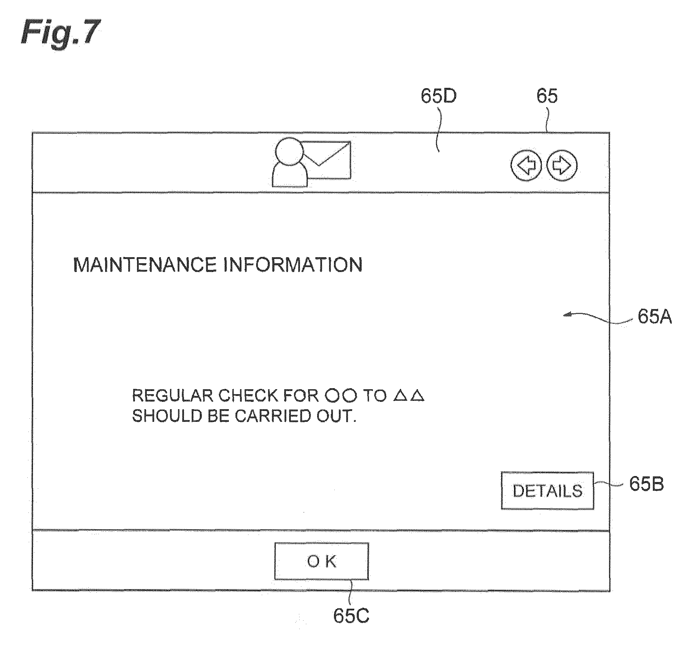

The notification information management unit 12E allows a message display screen 65 as shown in FIG. 7 to pop up on the display 11E when detecting touch on the display 11E, in the display 11E showing the new notification screen 60. The message display screen 65 displays a message display area 65A, a details button 65B, an OK button 65C, and a target identification 65D.

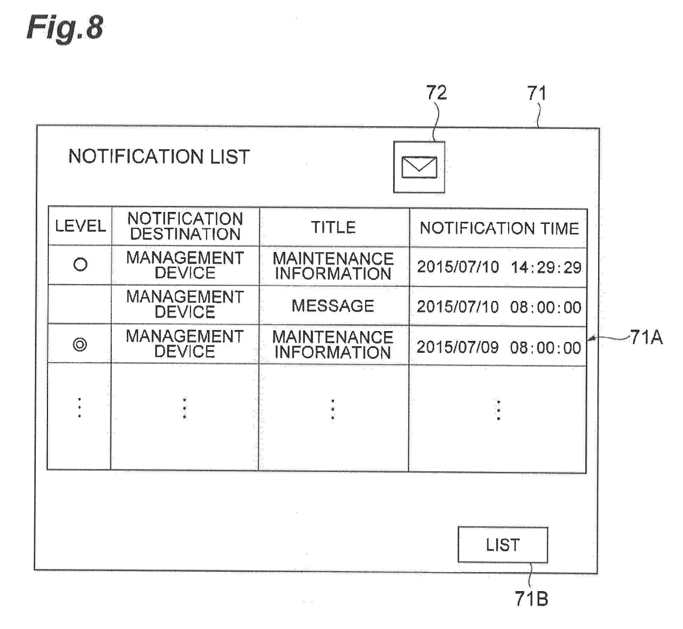

The message display area 65A is an area in which a message input by the management device 20 appears. As described above, the image information, which is an image converted from the character information, appears in this area. The details button 65B is a button for displaying the maintenance information transmitted from the management device 20 (machine-specific status list screen 75 (see FIG. 10) and the status information list screen 77 (see FIG. 11)). The display of the maintenance information will be detailed later. The OK button 65C is a button for closing the message display screen 65. The notification information management unit 12E displays a notification information list screen 71 as shown in FIG. 8 to display a list of notification information on the display 11E, when clicking on the OK button 65C is detected. The target identification 65D is a display section for easily identifying a target recipient in such a manner that the notifications addressed to operators, maintenance workers, and all are distinguishable from each other, as in the new notification screen 60.

In the example described above, when a touch on the display 11E is detected in a state in which the new notification screen 60 appears, the message display screen 65 corresponding to the newest notification information pops up. However, the message display screen 65 corresponding to the notification information selected (tapped) in the list 62 of the latest notification information may pop up.

Alternatively, the notification information management unit 12E may display the new notification screen 60 on the display 11E in the form of a screen saver. In the absence of manipulation on the display 11E or the like for a predetermined time, the screen saver switches on from a screen showing the operating state or the like. This function provided by the notification information management unit 12E can notify the target recipient of the notification information that the notification information has arrived, even when the new notification screen 60 disappears due to manipulation by a person other than the target recipient.

The notification information list screen 71 displayed by the notification information management unit 12E as shown in FIG. 8 will now be described. The notification information list screen 71 displays a display area 71 A showing the latest notification information and an unread notice 72 indicating the unread state. The display area 71A shows the degree of importance (level) of notification information, the notification destination, the title of notification information, and the notification time. When the row of the notification information to be viewed is touched (tapped) in the display area 71A, the message display screen 65 as shown in FIG. 7 corresponding to the notification information appears, or maintenance information (the machine-specific status list screen 75 (see FIG. 10) or the status information list screen 77 (see FIG. 11)) appears.

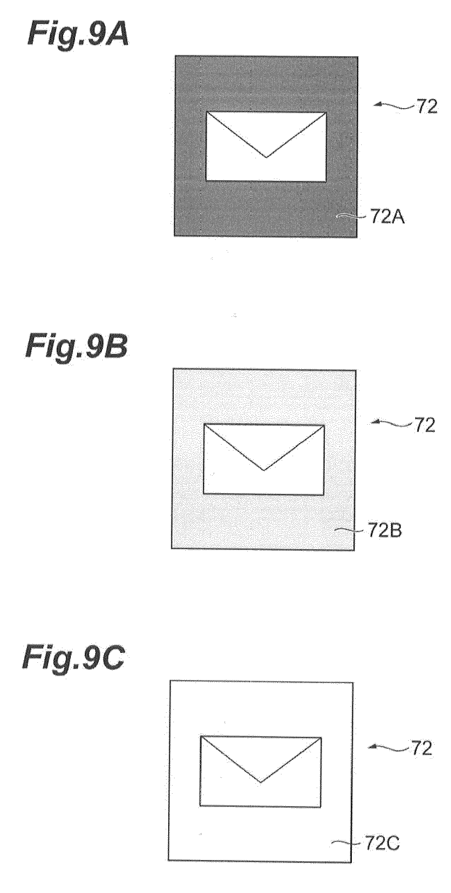

The unread notice 72 notifies the operator, the maintenance worker, or all that there is unread notice information, if any, in the notification information given from the management device 20. When the notification information addressed to a maintenance worker is unread, the notification information management unit 12E allows the unread notice 72 to flash on and off in the same background color (for example, green) 72A as when the notification addressed to operators is given in the new notification screen 60, as shown in FIG. 9A. Similarly, the unread notice 72 flashes on and off in the same background color (for example, orange) 72B as when the notification addressed to maintenance workers is given in the new notification screen 60, as shown in FIG. 9B. Similarly, the unread notice 72 flashes on and off in the same background color (for example, blue) 72C as when the notification addressed to all is given in the new notification screen 60, as shown in FIG. 9C. This function provided by the notification information management unit 12E can notify the target recipient of the notification information that the notification information has arrived, even when the new notification screen 60 disappears due to manipulation by a person other than the target recipient.

The machine-specific status list screen 75 shown in FIG. 10 shows the maintenance information distributed from the management device 20. The machine-specific status list screen 75 displays a display area 75A showing the maintenance information for each textile machinery 10 (for each machine) and a back button 75B. The display area 75A shows the identification number (machine No.) of the textile machinery 10, the total of defective units, and the respective subtotals of initial units, recurrent units, left units, and not-handled units. A numeric value in the figure shows the number of units. The back button 75B is a button for going back to the notification information list screen 71 shown in FIG. 8.

The status information list screen 77 shown in FIG. 11 is a screen for inputting response information for the maintenance information distributed from the management device 20. The status information list screen 77 shows detailed malfunction information for each textile processing unit 13 of the textile machinery 10. The response information may be configured to enable input of information related to the textile processing units 13 managed by the machine control device 11 alone or may be configured to enable input of information related to the textile processing units 13 managed by another machine control device 11.

The status information list screen 77 shown in FIG. 11 includes a display section 77A showing the identification number (machine No.) of the textile machinery 10, a display area 78 showing the cause of the defect, status information, the message from the management device 20, and a response entry field, and a back button 77B. The response entry field includes check boxes 78A to be ticked if a response is made to the defect cause provided by the management device 20, and check boxes 78B to be ticked if the defect cause provided by the management device 20 is intentionally left.

The back button 77B is a button for going back to the notification information list screen 71 shown in FIG. 8. When the maintenance information is distributed from the management device 20, the maintenance worker inputs the content of the response, that is, whether the defect cause has been handled, or the defect cause is intentionally left, through the status information list screen 77. The meaning "intentionally left" includes, for example, a case where the defect cause is unable to be handled due to parts on back-order and a case where appropriate response is unknown. Although the defect cause is denoted by a code in the illustrated example, the specifics thereof may be directly displayed. The status information refers to a defect determination made by the management device 20 (initial unit, recurrent unit, left unit, and not-handled unit).

The transmitter 12C transmits the response content (ticks in the check box 78A and the check box 78B) input on the status information list screen 77, together with the operating state information on the textile machinery 10, to the management device 20 through the communication unit 12A. The analyzer 22D updates the maintenance information (defect determination) based on the content of the response input on the status information list screen 77. The updating of the maintenance information will be detailed later.

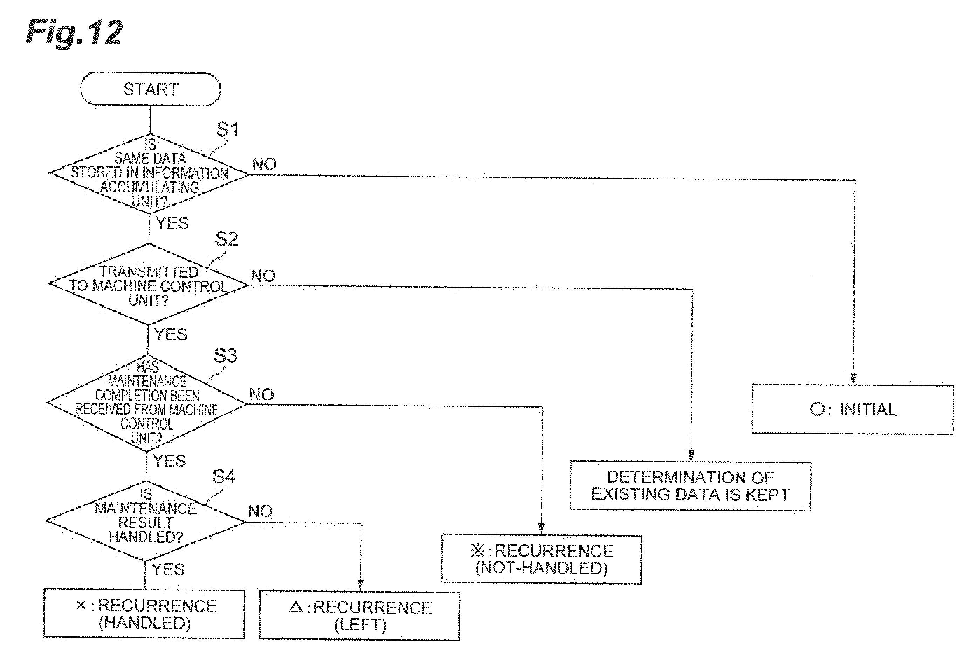

Referring to FIG. 12, a defect determination method in the analyzer 22D of the management device 20 will now be described. The analyzer 22D conducts a defect determination for individual textile processing units 13, based on the operating state information transmitted from the management device 20, that is, based on the information accumulated in the information accumulating unit 22C.

The analyzer 22D determines a defect for each textile processing unit 13, based on the information accumulated in the information accumulating unit 22C (start). It is then determined whether the same defect determination is stored in the information accumulating unit 22C (step S1). As used herein, the storing refers to storing of information as to whether the defect as described above is still ongoing at present (whether the defect has been eliminated). Therefore, when the specifications are designed to record the history of defect, it is determined whether the defect still continues at present. If the same defect determination is not stored in the information accumulating unit 22C (NO in S1), the analyzer 22D determines that the defect is of an "initial unit" that newly develops a defect. If the same defect determination is stored in the information accumulating unit 22C (YES in S1), the analyzer 22D determines whether the maintenance information indicating the defect (the determination result) has been transmitted to the machine control device 11 (step S2).

If the maintenance information has not been transmitted to the machine control device 11 (NO in S2), the analyzer 22D keeps the existing determination result, that is, the previous determination result. If the maintenance information has been transmitted to the machine control device 11 (YES in S2), the analyzer 22D determines whether the response information for the determination result has been received from the machine control device 11 (whether response information has been input to the status information list screen 77) (step S3). If the response information has not been received (NO in S3), the analyzer 22D determines that the defect is of a "not-handled unit" on which no measures have been taken due to a failure to view (no input on the status information list screen 77), although the maintenance information has been transmitted to the machine control device 11.

If the determination result shows that response information has been received (YES in S3), the analyzer 22D determines whether the defect is of a recurrent unit that develops a recurring defect or a left unit on which no measures have been taken intentionally, based on the content of the response information. That is, if the check box 78B, which is to be ticked when the defect cause provided by the management device 20 is intentionally left, is ticked (NO in S4), the analyzer 22D determines that the defect is of a "left unit" on which no measures are taken intentionally. In a case where the check box 78A, which is to be ticked when the defect cause provided by the management device 20 is handled, is ticked (YES in S4), the analyzer 22D determines that the defect is of a "recurrent unit" that develops a recurring defect.

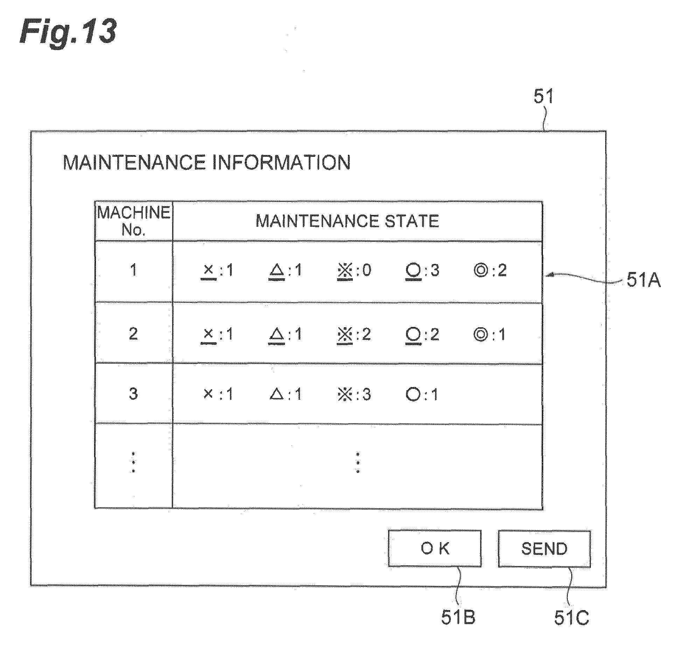

The maintenance information reference screen 51 displayed when the analyzer 22D updates the maintenance information based on the defect determination method shown in FIG. 12 will now be described. That is, after the result of analysis by the analyzer 22D, that is, the maintenance information is transmitted to the machine control device 11, the maintenance information reference screen 51 is updated as shown in FIG. 13. The maintenance information reference screen 51 does not differ from the one shown in FIG. 3 in that the maintenance information display area 51 A shows the respective numbers of initial units, recurrent units, left units, and not-handled units in single textile machinery (machine) 10, but differs in that "the maintenance information displayed in the maintenance information reference screen 51 has already been transmitted to the machine control device 11 ".

As shown in FIG. 13, "the maintenance information displayed in the maintenance information reference screen 51 has already been transmitted to the machine control device 11" can be identified by the under bars under the symbols "×", "Δ", " 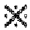 ", and "O". Shown at the rightmost column in the maintenance information display area 51A is the number of textile processing units 13 (hereinafter referred to as handled units) of which information has been input on the status information list screen 77. In place of the symbols "×", "Δ", "×", "O", and "⊙", the initial unit, the recurrent unit, the left unit, the not-handled unit, and the handled unit may be denoted by, for example, a red double circle, a green double circle, a yellow double circle, a blue double circle, and a black double circle, or may be denoted by characters "initial unit", "recurrent unit", "left unit", "not-handled unit", and "handled unit".

In the maintenance information reference screen 51, "before sending" and "after sending" of the maintenance information to the machine control device 11 may be distinguished from each other. That is, after transmitting the maintenance information to the machine control device 11 of the textile machinery 10, the color of the characters representing "machine No." may be changed. For example, in the maintenance information reference screen 51 shown in FIG. 3 and FIG. 13, the character color of "machine No.", which is red before transmitting the maintenance information, may be changed to blue after transmitting the maintenance information.

In the maintenance information reference screen 51, "before sending" in a case where the maintenance information is unsent may be distinguished from "before sending" in a case where the maintenance information has been transmitted by the transmitter 22E but fails to be received due to some reasons (for example, communication error, power-off of the textile machinery 10) (error transmission). In this case, for example, the character color of "machine No." in the latter case may be changed to a character color other than "red" or "blue", or the characters may be underlined so as to be distinguishable. In this case, for example, when the transmission timings vary among machines and the information "before sending" and the information "after sending" are displayed routinely, such as in the case of automatic transmission, the administrator can easily grasp occurrence of error transmission.

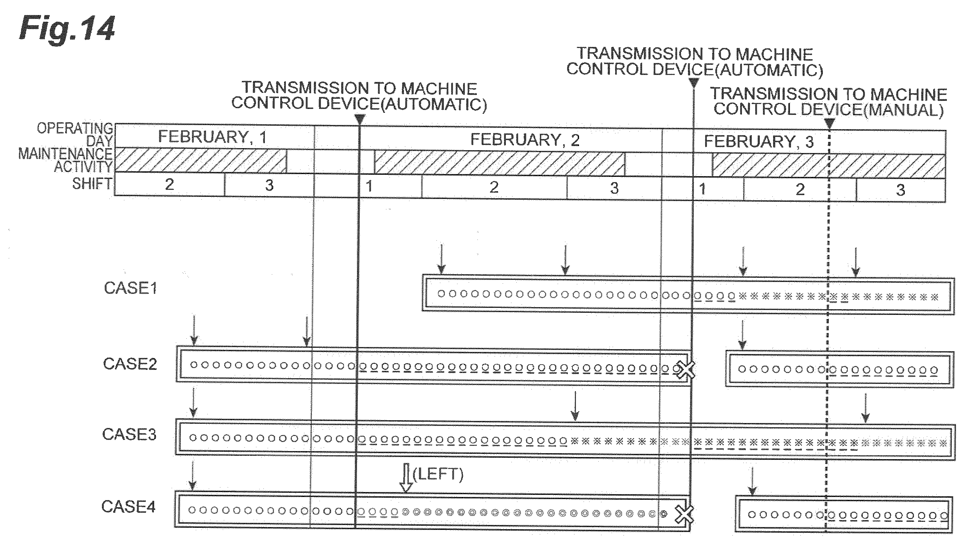

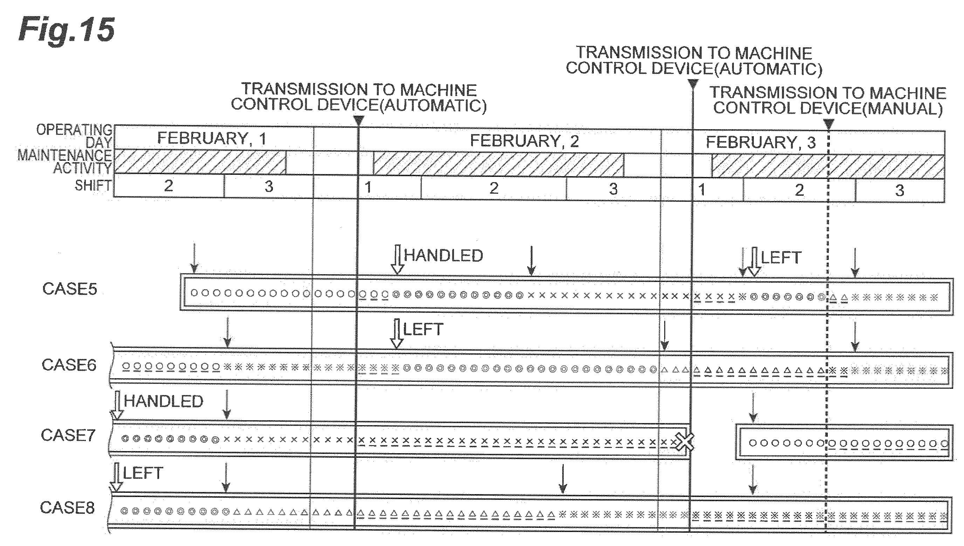

Referring to FIG. 14 and FIG. 15, the updating of maintenance information for one textile processing unit 13 based on the defect determination method shown in FIG. 12 will now be described using case studies below. That is, the updating of the display content in the maintenance information display area 51 A shown in FIG. 13 will be described using case studies illustrated below.

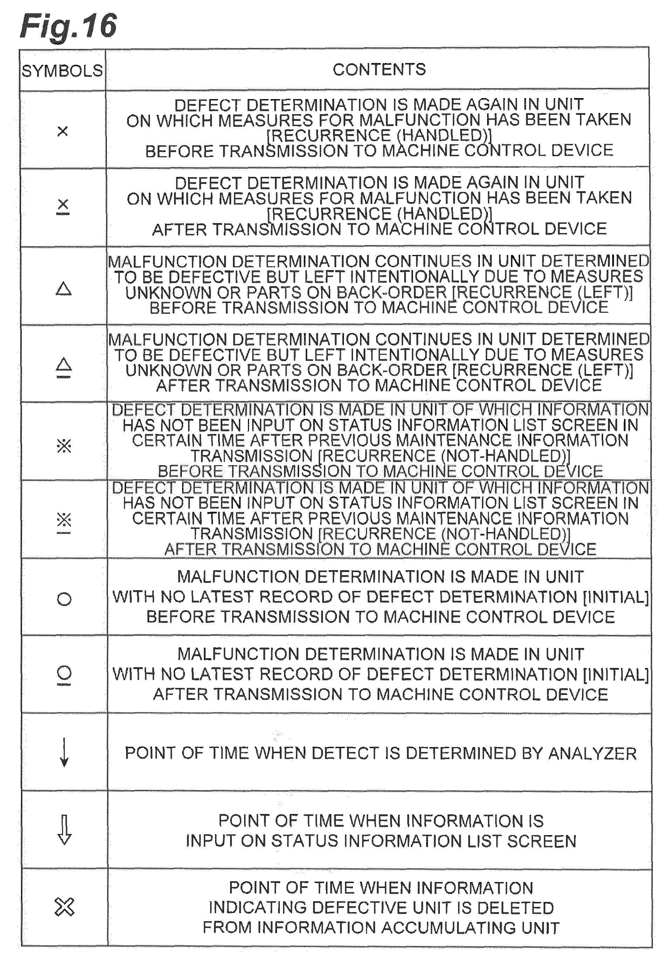

For example, three days from February 1 to February 3 and a plant operating in three shifts per day are simulated. Also assume that the maintenance work is carried out for a predetermined time from a fixed time (for example, 8:30 am) every day. The maintenance information to be transmitted by the management device 20 to the machine control device 11 is transmitted at a fixed time (for example, 8:00 am) every day in order to enable the worker in charge of the maintenance work to view the maintenance information simultaneously with the start of the work. The maintenance information is transmitted by the transmitter 22E. The legends of the symbols shown in FIG. 14 and FIG. 15 are provided in the table shown in FIG. 16.

CASE 1 will now be described. In CASE 1, it is assumed that the analyzer 22D of the management device 20 determines no defect as of February 1, and the analyzer 22D determines a defect in the second shift on February 2. The analyzer 22D confirms that no record of a defect determination in the textile processing unit 13 is stored in the information accumulating unit 22C, and then determines that the defect is "initial". The analyzer 22D determines a defect again as of the third shift but keeps the determination "initial", because the previous determination has not been transmitted as maintenance information to the machine control device 11.

The maintenance information related to the textile processing unit 13 is then transmitted to the machine control device 11 in accordance with the settings for routine transmission. At this point of time, the analyzer 22D processes the previous determination as being sent. Next, the analyzer 22D determines a defect in the second shift on February 3. At this point of time, the analyzer 22D performs an update with "recurrence (not-handled)" in which no information has been input from the status information list screen 77 in a certain time since the previous maintenance information transmission.

The maintenance information related to the textile processing unit 13 is then manually transmitted to the machine control device 11. At this point of time, the analyzer 22D processes the previous determination as being sent. The analyzer 22D then determines a defect again as of the third shift. At this point of time, the analyzer 22D performs an update with "recurrence (not-handled)" in which no information has been input from the status information list screen 77 in a certain time since the previous maintenance information transmission.

CASE 2 will now be described. In CASE 2, it is assumed that the analyzer 22D determines a defect in the second shift on February 1. The analyzer 22D confirms that no record of a defect determination in the textile processing unit 13 is stored in the information accumulating unit 22C at this point of time, and then determines that the defect is "initial". The analyzer 22D determines a defect again as of the end of the third shift but keeps the determination "initial", because the previous determination has not been transmitted as maintenance information to the machine control device 11. The maintenance information related to the textile processing unit 13 is then transmitted to the machine control device 11 in accordance with the settings for routine transmission. At this point of time, the analyzer 22D processes the previous determination as being sent. If the analyzer 22D does not determine a single defect until the next maintenance information transmission, it is determined that the defect has been eliminated, and the record "initial" is deleted from the information accumulating unit 22C.

When determining a defect as of the second shift on February 3, the analyzer 22D confirms that no history of a defect of the unit is stored in the information accumulating unit 22C, and then determines that the defect is "initial". The maintenance information related to the textile processing unit 13 is then manually transmitted to the machine control device 11. At this point of time, the analyzer 22D processes the previous determination as being sent.

CASE 3 will now be described. In CASE 3, it is assumed that the analyzer 22D determines a defect as of the second shift on February 1. The analyzer 22D confirms that no record of a defect determination in the textile processing unit 13 is stored in the information accumulating unit 22C, and then determines that the defect is "initial".

The maintenance information related to the textile processing unit 13 is then transmitted to the machine control device 11 in accordance with the settings for routine transmission. At this point of time, the analyzer 22D processes the previous determination as being sent. The analyzer 22D then determines a defect again as of the end of the second shift. At this point of time, the analyzer 22D performs an update with "recurrence (not-handled)" for the unit of which information has not been input on the status information list screen 77 in a certain time after the previous maintenance information transmission.

The maintenance information related to the textile processing unit 13 is then transmitted to the machine control device 11 in accordance with the settings for routine transmission. At this point of time, the analyzer 22D processes the previous determination as being sent. The maintenance information related to the textile processing unit 13 is then manually transmitted to the machine control device 11. The analyzer 22D keeps "recurrence (not-handled)". The analyzer 22D then determines a defect as of the start of the third shift. At this point of time, the analyzer 22D performs an update with "recurrence (not-handled)" for the unit of which information has not been input on the status information list screen 77 in a certain time after the previous maintenance information transmission.

CASE 4 will now be described. In CASE 4, it is assumed that the analyzer 22D determines a defect as of the second shift on February 1. The analyzer 22D confirms that no record of a defect determination in the textile processing unit 13 is stored in the information accumulating unit 22C at this point of time, and then determines that the defect is "initial".

The maintenance information related to the textile processing unit 13 is then transmitted to the machine control device 11 in accordance with the settings for routine transmission. At this point of time, the analyzer 22D processes the previous determination as being sent. It is assumed that, for example, information that a defect determination has been made but measures to be taken are unknown, or that the defect is intentionally left due to parts on back-order, is input on the status information list screen 77 as of the end of the first shift. The analyzer 22D performs an update, assuming that some measures have been taken for the unit at this point of time.

If the analyzer 22D does not determine a single defect until the next maintenance information transmission, it is determined that the defect has been eliminated, and the record "initial" is deleted from the information accumulating unit 22C. When determining a defect as of the second shift on February 3, the analyzer 22D confirms that no history of a defect of the unit is stored in the information accumulating unit 22C, and then determines that the defect is "initial". The maintenance information related to the textile processing unit 13 is then manually transmitted to the machine control device 11. At this point of time, the analyzer 22D processes the previous determination as being sent.

CASE 5 will now be described. It is assumed that the analyzer 22D determines a defect as of the second shift on February 1. The analyzer 22D confirms that no record of a defect determination in the textile processing unit 13 is stored in the information accumulating unit 22C at this point of time, and then determines that the defect is "initial". The maintenance information related to the textile processing unit 13 is then transmitted to the machine control device 11 in accordance with the settings for routine transmission. At this point of time, the analyzer 22D processes the previous determination as being sent. It is assumed that the information "handled" is input on the status information list screen 77 as of the end of the first shift. The analyzer 22D performs an update, assuming that some measures have been taken on the unit at this point of time.

It is assumed that the analyzer 22D determines a defect as of the second shift. The analyzer 22D confirms that a record "handled" in the textile processing unit 13 is stored in the information accumulating unit 22C at this point of time, and then performs an update with "recurrence (handled)". The maintenance information related to the textile processing unit 13 is then transmitted to the machine control device 11 in accordance with the settings for routine transmission. At this point of time, the analyzer 22D processes the previous determination as being sent.

It is assumed that the analyzer 22D determines a defect as of the start of the second shift. At this point of time, the analyzer 22D performs an update with "recurrence (not-handled)" for the unit of which information has not been input on the status information list screen 77 in a certain time after the previous maintenance information transmission. It is then assumed that information that a defect determination has been made but measures to be taken are unknown, or that the defect is intentionally left due to parts on back-order, is input on the status information list screen 77 as of the second shift. The analyzer 22D performs an update, assuming that some measures have been taken on the unit at this point of time. The maintenance information related to the textile processing unit 13 is then manually transmitted to the machine control device 11. At this point of time, the analyzer 22D updates the previous determination with "recurrence (left)" in which malfunction is continuously determined in the unit intentionally left due to measures unknown or parts on back-order.

It is assumed that the analyzer 22D determines a defect as of the start of the third shift. At this point of time, the analyzer 22D performs an update with "recurrence (not-handled)" in which no information has been input on the status information list screen 77 in a certain time since the previous maintenance information transmission.

CASE 6 will now be described. In CASE 6, it is assumed that the "initial" determination has been kept since the previous day and this determination is processed as being sent. Here, it is assumed that the analyzer 22D determines a defect as of the third shift on February 1. At this point of time, the analyzer 22D performs an update with "recurrence (not-handled)" in which no information has been input on the status information list screen 77 in a certain time since the previous maintenance information transmission.

The maintenance information related to the textile processing unit 13 is then transmitted to the machine control device 11 in accordance with the settings for routine transmission. At this point of time, the analyzer 22D processes the previous determination as being sent. It is assumed that information that a defect determination has been made but measures to be taken are unknown, or that the defect is intentionally left due to parts on back-order, is input on the status information list screen 77 as of the first shift. At this point of time, the analyzer 22D performs an update, assuming that some measures have been taken on the unit.

It is assumed that the analyzer 22D determines a defect in the first shift on February 3. At this point of time, the analyzer 22D performs an update with "recurrence (left)" in which a malfunction determination is kept in the unit intentionally left due to measures unknown or parts on back-order. The maintenance information related to the textile processing unit 13 is then transmitted to the machine control device 11 in accordance with the settings for routine transmission. At this point of time, the analyzer 22D processes the previous determination as being sent.

The maintenance information related to the textile processing unit 13 is then manually transmitted to the machine control device 11. At this point of time, the analyzer 22D processes the previous determination as being sent. The analyzer 22D then determines a defect again as of the third shift. At this point of time, the analyzer 22D performs an update with "recurrence (not-handled)" in which no information has been input on the status information list screen 77 in a certain time since the previous maintenance information transmission.

CASE 7 will now be described. In CASE 7, it is assumed that some measures (handled) have been taken since the previous day. Here, it is assumed that the analyzer 22D determines a defect in the third shift on February 1. The analyzer 22D confirms that a record "handled" in the textile processing unit 13 is stored in the information accumulating unit 22C at this point of time, and then performs an update with "recurrence (handled)". The maintenance information related to the textile processing unit 13 is then transmitted to the machine control device 11 in accordance with the settings for routine transmission. At this point of time, the analyzer 22D processes the previous determination as being sent. If the analyzer 22D does not determine a single defect until the next maintenance information transmission, the record of a defect determination is deleted from the information accumulating unit 22C, assuming that the defect has been eliminated.

When determining a defect as of the second shift on February 3, the analyzer 22D confirms that no history of a defect of the unit is stored in the information accumulating unit 22C, and then determines that the defect is "initial". The maintenance information related to the textile processing unit 13 is then manually transmitted to the machine control device 11. At this point of time, the analyzer 22D processes the previous determination as being sent.

CASE 8 will now be described. In CASE 8, it is assumed that some measures (left) have been taken since the previous day. Here, it is assumed that the analyzer 22D determines a defect as of the third shift on February 1. At this point of time, the analyzer 22D performs an update with "recurrence (left)" in which a malfunction determination continues in the unit intentionally left due to measures unknown or parts on back-order. The maintenance information related to the textile processing unit 13 is then transmitted to the machine control device 11 in accordance with the settings for routine transmission. At this point of time, the analyzer 22D processes the previous determination as being sent.

The analyzer 22D then determines a defect again as of the end of the second shift. At this point of time, the analyzer 22D updates the previous determination with "recurrence (left)" in which a malfunction determination continues in the unit intentionally left due to measures unknown or parts on back-order. The maintenance information related to the textile processing unit 13 is then transmitted to the machine control device 11 in accordance with the settings for routine transmission. At this point of time, the analyzer 22D processes the previous determination as being sent. The maintenance information related to the textile processing unit 13 is then manually transmitted to the machine control device 11. The analyzer 22D continuously processes the previous determination as being sent.

As described above, in the textile machinery management system 1 in the present embodiment, the machine control device 11 acquires not only the operating state information on the textile machinery 10 but also the response information for the analysis result output from the management device 20, and transmits the response information to the management device 20 through the information acquiring unit 22B. Thus, the response information for the analysis result can be easily acquired and easily collected in the management device 20. This makes response information easy to acquire, which is conventionally difficult to collect, and enables the management device 20 to conduct analysis based on the response information. As a result, the maintenance activities for the textile machinery 10 can be assisted effectively.

In the textile machinery management system 1 in the present embodiment, the machine control device 11 is configured to have the analysis function similar to the analyzer 22D of the management device 20 and is configured to analyze the operating state information stored in the information storage unit 12B and display the analysis result on the display 11E. The analysis in such a machine control device 11 determines a malfunction real-time or for a relatively short span based on information from, for example, a sensor installed in the textile processing unit, whereas the analysis in the management device 20 determines a malfunction in a relatively long span based on, for example, the operating state information stored in the information accumulating unit 22C. In this manner, the analysis by logic different between the machine control device 11 and the management device 20 is performed to provide layered malfunction information.

In the management device 20 of the present embodiment, the information acquiring unit 22B inputs the operating state information on the textile machinery 10 through the first communication unit 22A. It is thus possible to easily input the operating state information to the management device 20.

The management device 20 of the present embodiment is configured as a host management device for a plurality of machine control devices 11. An efficient configuration is thus implemented, in which the management device 20 serving as a host management device analyzes the operating state information on the textile machinery 10, and the management device 20 distributes a message together with the analysis result to the individual machine control devices 11.

In the management device 20 of the present embodiment, the information acquiring unit 22B inputs the control conditions of the textile machinery 10 in addition to the operating state information. The analyzer 22D analyzes the operating state information and the control conditions. The analysis from more multiple points of views thus can be presented.

In the management device 20 of the present embodiment, the transmitter 22E can transmit a command to give an instruction on the operation of the textile machinery 10 to the machine control device 11 through the first communication unit 22A. This enables the textile machinery 10 as a destination to perform some operation, in addition to transmission of the analysis result and the message. For example, this creates a state in which the operator of the textile machinery 10 easily conducts work in accordance with the message.

In the foregoing embodiment, the machine control device 11 of the textile machinery 10 is configured to allow the tower lamp 11 H provided on the textile machinery 10 to illuminate or flash on and off without a specific command, when receiving a message. However, when transmitting the analysis result to the machine control device 11, the management device 20 may additionally transmit a command (notice command) to allow the tower lamp 11 H to illuminate or flash on and off, so that the machine control device 11 of the textile machinery 10 allows the tower lamp 11H to illuminate or flash on and off based on the command. In this case, the illumination or the flashing on and off of the tower lamp 11 H can appropriately prompt, for example, the operator of the textile machinery 10 to view the analysis result.

For example, the machine control device 11 receiving the maintenance information from the management device 20 can display at least one of a specific instruction and information related to the items to work on (check, inspection, and repair methods) in accordance with the maintenance information, that is, the contents of the defective textile processing unit information. For example, the machine front LED of the malfunction textile processing unit may illuminate or flash on and off based on the contents of defective textile processing unit information in the maintenance information. In this case, for example, the maintenance worker can recognize a defective part efficiently.

As described above, the user of the management device 20 can freely input the content of the message (through the text box 53I). For example, the content of the message may be supplementary remarks on the analysis result or an operation instruction to the operator. When compared with transmission of the maintenance information alone as shown in FIG. 10 and FIG. 11, flexible and productive information can be distributed from the user of the management device 20. In addition, since the analysis result and the message can be transmitted simultaneously to the plurality of units of textile machinery 10, information from the user of the management device 20 can be distributed accurately and efficiently even in a large-scale plant including a number of units of textile machinery 10.

The management device 20 of the present embodiment includes the image converter 22G that converts a message of a character string input from the message input unit 22F into an image. The transmitter 22E transmits the message converted into an image by the image converter 22G to the machine control device 11. This eliminates the need for preparing font data for rendering character strings in individual machine control devices 11 for displaying messages, thereby implementing a simple configuration as a whole.

Even in a case where multilingual messages are supported, the font data for multiple languages for rendering message character strings is prepared only on the management device 20, and the individual machine control devices 11 need not have font data, which often requires much data volume. A message in various languages thus can be displayed on the display 11E with a simple configuration of the machine control device 11.

In the machine control device 11 of the present embodiment, the analysis result and the message appear on the display 11E capable of displaying information. The message thus can be distributed to, for example, the operator of the textile machinery 10 by a simple method.

The machine control device 11 of the present embodiment includes the operation controller 12H that controls the operation of the textile machinery 10. When receiving a command to give an instruction on the operation of the textile machinery 10 from the management device 20, the operation controller 12H allows the textile machinery 10 to operate in accordance with the command. This enables the textile machinery 10 to perform some operation in accordance with the command, in addition to displaying a message on the display 11E. For example, this creates a state in which, for example, the operator of the textile machinery 10 easily conducts work in accordance with the message from the management device 20.

In the textile machinery management system 1 of the present embodiment, the management device 20 includes the information accumulating unit 22C that stores the operating state information input through the information acquiring unit 22B. The machine control device 11 of the textile machinery 10 includes the information storage unit 12B that stores the operating state information on the machinery itself. The information accumulating unit 22C is configured to store the operating state information for a period longer than the information storage unit 12B. It is thus possible to obtain the analysis result of the operating state information for a long period at the management device 20, without increasing the capacity of the information storage unit 12B of the individual textile machinery 10. This can simplify the configuration of the textile machinery 10.

Although an embodiment has been described above, the present disclosure is not limited to the foregoing embodiment.

In the foregoing embodiment, the textile machinery management system 1 including the machine control device 11 and the management device 20 has been described. However, the machine control device 11 or the management device 20 as an embodiment of the present disclosure may singly achieve the same effects as in the foregoing embodiment. That is, the management device 20 that manages the textile machinery 10 having the machine control device 11 includes the information acquiring unit 22B that acquires the operating state from the machine control device 11 acquiring the operating state information on the textile machinery 10, the analyzer 22D that analyzes the operating state information acquired by the information acquiring unit 22B, and the transmitter 22E that transmits the result of analysis by the analyzer 22D to the control device. The analyzer 22D updates the analysis result based on the response information for the analysis result acquired from the machine control device 11 through the information acquiring unit 22B. This management device 20 also achieves the same effects as in the foregoing embodiment.

Alternatively, the machine control device 11 of the textile machinery 10 managed by the management device 20 and connected to the management device 20 includes the receiver 12D that acquires the result of analysis of the operating state information in the textile machinery 10 from the management device 20, the notification information management unit 12E that outputs the analysis result, and the maintenance information input unit 12F that accepts input of response information for the analysis result. The response information accepted by the maintenance information input unit 12F is output to the management device 20. This machine control device 11 also achieves the same effects as in the foregoing embodiment.

The machine control device 11 of the textile machinery 10 and the management device 20 can connect (access) to each other through any other network rather than the LAN 3. The network is not limited to a wired network but may be a wireless network.

The management device 20 may manage any number of units of textile machinery 10, that is, one or two or more textile machinery 10.

In the example described in the foregoing embodiment, a message is transmitted together with maintenance information from the management device 20. However, the maintenance information alone may be transmitted, or a message alone may be displayed.

Although the management device 20 is configured as a control unit, for example, it may be configured as a desktop personal computer. The management device 20 is not limited to this example but may be configured, for example, as an easy-to-carry tablet computer. In this case, a message can be input using the touch panel in place of the keyboard.

In the foregoing embodiment and modifications, the management device 20 is configured as a control unit or a computer separate from the machine control device 11. However, the configuration may be modified such that one of the machine control devices 11 of the plurality of units of textile machinery 10 fulfills the function of the management device.

In the foregoing embodiment, the message input through the message input unit 22F is transmitted from the management device 20 to the textile machinery 10 (machine control device 11) in the form converted into an image. However, the message may be transmitted in the form of character string data. In this case, the volume of data transferred can be reduced.

In the foregoing embodiment, in the maintenance information reference screen 51 after the management device 20 transmits the maintenance information to the machine control device 11, "the maintenance information displayed in the maintenance information reference screen 51 has already been transmitted to the machine control device 11" can be identified by the under bars under the symbols "×", "Δ", "×", and "O", and the number of units on which some measures have been taken in response to the transmitted maintenance information is denoted by "⊙". In place of or in addition to this, the determination results successively determined and updated in time series as shown in FIG. 13 and FIG. 14 may be displayed real-time.

In the status information list screen 77, two items (handled and left) are input as response information. However, information as to specifically what response has been made (for example, parts replacement, adjustment of default values) may be input. In this case, preferably, a pull-down menu may be used to save time and efforts of input. The management device 20 may be configured to allow such information not only to be viewed but also to be reflected in the maintenance information.

A notification of reception of the analysis result and the message may be given, for example, acoustically with a buzzer, rather than visually with the tower lamp 11 H.

In the foregoing embodiment or modifications, one unit controller 13A is provided for each textile processing unit 13. However, in place of this, one unit controller 13A may be provided for the plurality of (for example, four) textile processing units 13, so that the unit controller 13A controls the textile processing units 13.

At least part of the embodiment and modifications described above may be combined as appropriate.

The management device according to an embodiment of the present disclosure that manages textile machinery having a control device capable of acquiring operating state information on the textile machinery includes: a first acquisition unit configured to acquire the operating state from the control device acquiring the operating state information on the textile machinery; an analyzer configured to analyze the operating state information acquired by the first acquisition unit: and a first output unit configured to output the result of analysis by the analyzer. The analyzer updates the analysis result based on the response information for the analysis result acquired from the control device through the first acquisition unit.

In the management device configured as described above, not only the operating state information on the textile machinery but also the response information for the analysis result output from the management device can be acquired. This enables response information, which is conventionally difficult to collect, to be easily collected in an electronic data format and enables the management device to conduct analysis based on the response information. As a result, the maintenance activities for the textile machinery can be assisted more effectively.

The control device according to an embodiment of the present disclosure is included in textile machinery managed by a management device and connected to the management device and can acquire operating state information on the textile machinery. The control device includes: a second acquisition unit configured to acquire the result of analysis of the operating state information in the textile machinery from the management device; a second output unit configured to output the analysis result acquired by the second acquisition unit; and a maintenance information input unit configured to accept input of response information for the analysis result output by the second output unit. The response information accepted by the maintenance information input unit is output to the management device.

In the control device configured as described above, not only the operating state information on the textile machinery but also the response information for the analysis result output from the management device can be input. This enables response information, which is conventionally difficult to collect, to be easily collected in an electronic data format and enables the management device to conduct analysis based on the response information. As a result, the maintenance activities for the textile machinery can be assisted more effectively.

The control device according to an embodiment of the present disclosure is a textile machinery management system including textile machinery having a control device and a management device that manages the textile machinery. The management device includes: an information input unit configured to acquire operating state information on the textile machinery; an analyzer configured to analyze the operating state information acquired by the information input unit; and a transmitter configured to transmit the result of analysis by the analyzer to the control device. The control device of the textile machinery includes: a receiver configured to acquire the analysis result related to the operating state information from the management device; an output unit configured to output the analysis result acquired from the management device; and a maintenance information input unit configured to accept input of response information for the analysis result. In a case where the response information is input to the maintenance information input unit, the analyzer updates the analysis result based on the response information acquired through the information input unit.

## Claims

1. A textile machinery management system (1) comprising:
textile machinery (10) having a control device (11); and
a management device (20) configured to manage the textile machinery, the control device being configured to acquire operating state information on the textile machinery, wherein
the management device comprises:
a first acquisition unit (22B) configured to acquire the operating state information on the textile machinery that is acquired by the control device;
an analyzer (22D) configured to analyze the operating state information acquired by the first acquisition unit; and
a first output unit (22E) configured to output a result of analysis by the analyzer, wherein
the control device comprises:
a second acquisition unit (12D) configured to acquire the result of analysis output by the first output unit;
a second output unit (12E) configured to output the result of analysis acquired by the second acquisition unit; and
a maintenance information input unit (12F) configured to accept input of response information for the result of analysis output by the second output unit, and wherein
the first acquisition unit is also configured to acquire the response information accepted by the maintenance information input unit, and
the analyzer is further configured to, in a case where the response information is input to the maintenance information input unit, update the result of analysis based on the response information acquired through the first acquisition unit.

2. The textile machinery management system according to claim 1, wherein the maintenance information input unit is configured to accept one of a plurality of selectable pieces of information prepared in advance, as the response information.

3. The textile machinery management system according to claim 2, wherein the plurality of selectable pieces of information prepared in advance include "handled", "actively left", and "accidentally left".

4. The textile machinery management system according to claim 3, wherein the maintenance information input unit is configured to accept specific information among the plurality of selectable pieces of information prepared in advance, as the response information, when nothing is input as the response information for a predetermined time or longer.

5. The textile machinery management system according to claim 3, wherein the maintenance information input unit is configured to accept the "accidentally left" as the response information when nothing is input as the response information for a predetermined time or longer.

6. The textile machinery management system according to any one of claims 2 to 5, wherein the analyzer is configured to analyze whether an error occurs in the textile machinery based on the operating state information and the response information and to determine which of "initial", "recurrence after being handled", and "recurrence after being left" the error is.

7. The textile machinery management system according to any one of claims 1 to 6, wherein the management device is connected to a display device (31 A) configured to display the result of analysis output by the second output unit.

8. The textile machinery management system according to claim 7, wherein
the control device further comprises a third output unit (12C) configured to output the response information accepted by the maintenance information input unit, wherein
the first acquisition unit is configured to acquire, at any time, the response information output by the third output unit, and wherein
the response information for the operating state information is updated at any time and displayed on the display device.

9. The textile machinery management system according to claim 8, wherein the analyzer is configured to analyze the operating state information at a second timing different from a first timing at which the first output unit periodically outputs the result of analysis, the second timing being a periodical timing shorter than the first timing.

10. The textile machinery management system according to any one of claims 7 to 9, wherein the operating state information is displayed on the display device, in a state in which error recurrence states are sorted according to each unit of the textile machinery.

11. The textile machinery management system according to any one of claims 1 to 10, wherein
the first output unit has a first output mode and a second output mode, as a mode for deciding on a timing for outputting the result of analysis to the control device,
in the first output mode, the result of analysis is automatically output periodically at a preset timing, and
in the second output mode, the result of analysis is output at a timing manually set.
